(19) Europäisches Patentamt

European Patent Office

Office européen des brevets

(11) **EP 1 445 902 B1**

(12) **EUROPEAN PATENT SPECIFICATION**

(45) Date of publication and mention
of the grant of the patent:
**17.05.2006 Bulletin 2006/20**

(51) Int Cl.:
**H04L 25/02** (2006.01)

(21) Application number: **03290323.9**

(22) Date of filing: **10.02.2003**

(54) **Low voltage differential signaling (LVDS) receiver**

Niederspannungsdifferenzsignal (LVDS) - Empfänger

Récepteur de signaux différentiels basse tension (LVDS)

(84) Designated Contracting States:
**AT BE BG CH CY CZ DE DK EE ES FI FR GB GR HU IE IT LI LU MC NL PT SE SI SK TR**

(43) Date of publication of application:
**11.08.2004 Bulletin 2004/33**

(73) Proprietor: **ALCATEL**
**75008 Paris (FR)**

(72) Inventor: **Gajdardziew Radelinow, Andrzej**
**2100 Deurne (Antwerp) (BE)**

(74) Representative: **Narmon, Gisèle Marie Thérèse et al**
**Alcatel Bell N.V.**
**Intellectual Property Department**
**Francis Wellesplein 1**
**2018 Antwerpen (BE)**

(56) References cited:
**EP-A- 1 067 691          US-A- 5 154 066**
**US-A1- 2002 109 075**

## Description

## Field of the invention

The present invention is related to a device and a high-speed receiver including such a device, which can for instance be used for communication of serial binary data over a copper line, according to the Low Voltage Differential Signalling method.

## State of the art

Low Voltage Differential Signalling (LVDS) is a method for high-speed serial transmission of binary data over a copper transmission line. It is widely adopted in telecom equipment requiring high bandwidth data and clock transfer because of its immunity to crosstalk noise, low electromagnetic interference and low power dissipation. As telecom and networking systems move towards multi-Gb/s rates, maintaining adequate signal integrity becomes the bottleneck for system expansion. The use of optical interconnections is still limited due to their high cost, while copper transmission lines still provide a cost-effective alternative. The main cause of inter-symbol interference in the high-speed serial links is the attenuation and the dispersal of frequency components resulting from the signal propagation down a transmission line. Data pulses respond to these effects with a loss of amplitude and displacement in time. This results in signal skew (jitter) at the input of the receiving LVDS device, increasing the bit error rate of the link. In the Gb/s range the deterministic jitter occupies a significant part of the receiver input data eye for typical interconnection lengths, setting hard requirements for the LVDS receiver in terms of jitter contribution. The increasing number of backplane interconnections significantly increases the board crosstalk noise. The power supply interference is another concern since the number of serial links per ASIC is continuously increasing.

The original LVDS standard ANSI/TIA/EIA-644 specifies rail-to-rail common-mode range of the receiver. Although the common-mode disturbance might have lower amplitude, it is important to guarantee full common-mode range and good common-mode rejection. Since the original LVDS standard was defined for 2.5V devices and lower bit rates, it is impossible to design a fully compliant LVDS transceiver in a state-of-the-art 1.2V process.

A common technique allowing rail-to-rail common-mode range is the use of complementary NMOS-PMOS input stages with overlapped active regions. Although a 1.2V digital CMOS process is convenient for high-speed designs, it puts limitations on the number of MOS devices stacked between the supply rails.

The closest prior art solution, as described in patent EP 1 067 691 A1, will experience problems at a supply voltage of about 1V (used in 0.13 $\mu$m CMOS technologies), because the presence of the current source in the prior art embodiment gives in the transistor implementation an additional level in the number of stacked devices (at least 3). Moreover, this transistor level implementation of the current source is difficult in a low-voltage process when none of the current source terminals is grounded. The current source implementation would add additional capacitive load to the circuit nodes, reducing the speed and increasing the data dependent jitter. It would also cause variation of the differential gain and propagation delay at different common-mode levels.

The prior art solution requires a high-speed voltage comparator to be used together with two identical input stages. Furthermore, the prior art implementation is relatively complex in terms of numbers of transistors required.

## Aims of the invention

The present invention aims to provide a receiver structure that does not have the drawbacks of the state of the art. It also aims to provide a receiver structure, which can be processed in advanced technologies (requiring a low supply voltage), while at the same time being simple and solving the problems of speed, reduced dynamic range, and differential gain.

## Summary of the invention

The present invention is related to a device comprising, between a differential pair of inputs, consisting of a first input and a second input, and an output, a differential pre-amplifier that comprises a first and a second half pre-amplifier, each of said half pre-amplifiers having a first and a second input and an output. The device further comprises

• an offset-reducing block cascaded with said differential pre-amplifier and arranged for reducing the offset generated by said differential pre-amplifier, the outputs of said half pre-amplifiers being coupled together to form an input to said offset-reducing block, and

• a buffering block in series with said offset-reducing block and arranged for amplifying and buffering the output voltage of said offset-reducing block,

the first input of said first half pre-amplifier is coupled to a first input of said device, whilst the second input of said first half pre-amplifier is coupled to the second input of said device, and
the first input of said second half pre-amplifier is coupled to the first input of said device, whilst the second input of said second half pre-amplifier is coupled to the second input of said device.

Advantageously, the offset-reducing block comprises a transimpedance circuit, that preferably comprises a resistance and an inverter stage.

According to a specific embodiment the offset-reducing block additionally comprises means for equalisation. Said means for equalisation comprises a RC network.

In another embodiment the buffering block comprises means for amplification and pulse shaping.

In a specific embodiment the means for amplification and pulse shaping comprises an inverter circuit.

In a particular embodiment the invention relates to a receiver structure comprising a device as previously described.

## Short description of the drawings

Fig. 1 represents the prior art solution.

Fig. 2 represents the solution according to the invention.

Fig. 3 represents a first transistor level implementation of the invention.

Fig.4 represents a second transistor level implementation including the optional equalisation.

## Detailed description of the invention

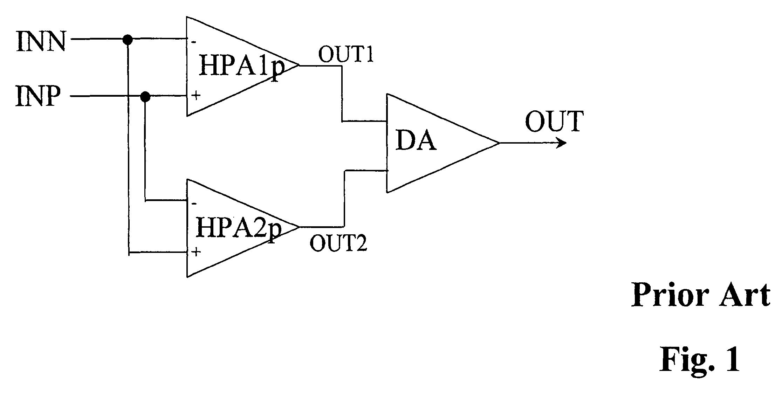

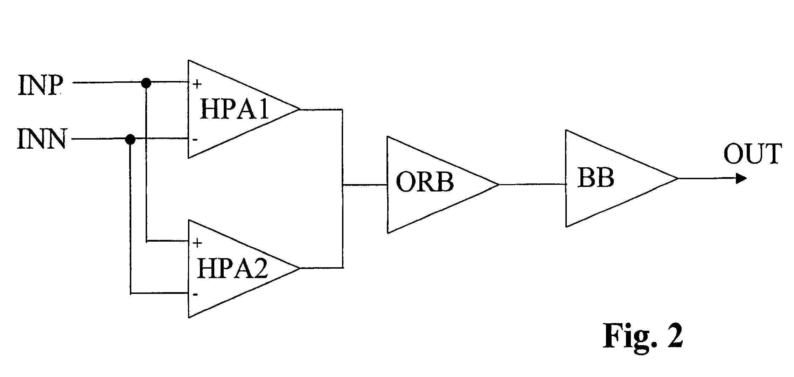

The prior art solution is shown in Fig.1 and the structure of the invention in Fig.2. In the prior art, the pre-amplifier block was followed by a comparator for comparing two incoming voltages (outputs of both half amplifiers). In the present invention, such a comparator block is no longer present, but is replaced by an offset-reducing block followed by a buffering block. Such an offset-reducing block, in a preferred embodiment consisting of a transimpedance stage, is now adapted to reduce the offset originating from the previous stage consisting of two half-amplifiers, by forcing its sole input voltage being the output voltage of both output terminals of both amplifiers coupled together, to a fixed threshold. The buffering stage BB, in its most simple implementation consisting of an inverter INV, is performing amplification and pulse shaping.

The inputs INN and INP to the two 'half amplifiers' (HPA1p and HPA2p) of the prior art are cross-connected in order to generate complementary output signals (i.e. with 180 degrees phase shift), while in the invention they are in phase. The outputs of both half amplifiers are separated in the prior art, whereas now they are coupled together.

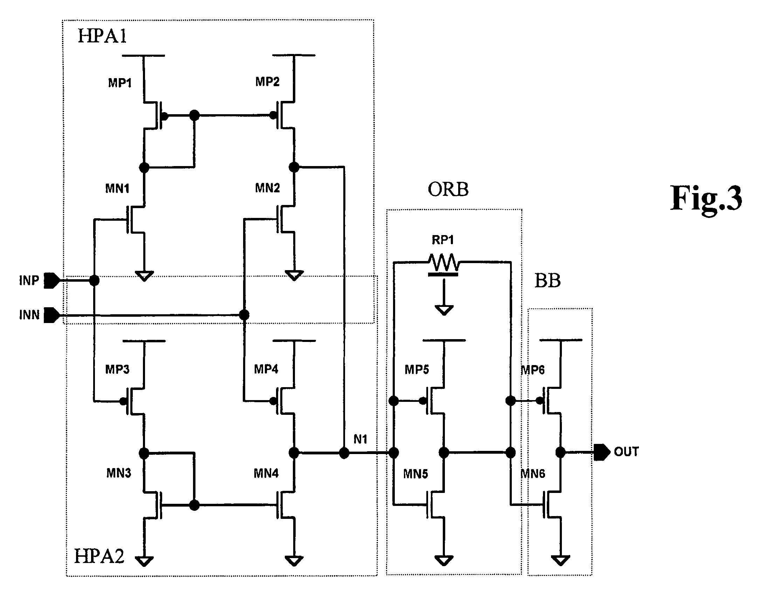

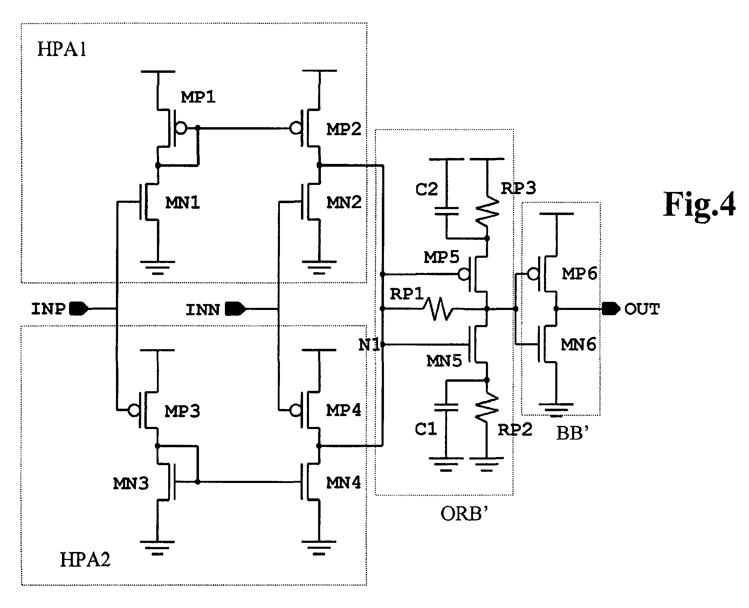

Detailed embodiments of the device will now be described, with reference to figures 3 and 4. It is to be remarked that, although the figures depict implementations in a CMOS technology, embodiments in other technologies such as bipolar, BICMOS , III-V and other technologies are as well possible. In this case the MOS transistors depicted in figures 3 and 4 are to be replaced by the appropriate bipolar or other active devices, as is well known to a person skilled in the art. In the remainder of this document, a MOS implementation will be described into more detail.

The receiver device structure according to the invention is designed for a low-voltage technology, such as an advanced CMOS technology. In such technologies the short-channel effect in sub-micrometer CMOS processes causes linearisation of the MOS quadratic characteristic, improving the similarity of the NMOS and PMOS $I_{DS}(V_{GS})$ (drain current as function of the gate to source voltage) characteristics. Since the low supply voltage and the linear $I_{DS}(V_{GS})$ characteristic limit the maximum drain current to practical values, it is possible to implement a grounded source input differential stage without additional current sources, improving the input dynamic range. An additional advantage of this structure is the fact that the required slew-rate is achieved with smaller W/L values (with W denoting width and L length), as more gate-overdrive voltage is available. Because the function of the input stage is conversion from differential input to single-ended 'digital' output, its most important parameter is the common-mode rejection. Once this conversion is done in a proper way, one can provide the necessary gain in the single-ended domain by simple inverters. It is important to maintain a low voltage gain in the input stage in order to avoid saturation memory effects, causing data dependent jitter. In the proposed simplified topology as shown in Fig.3, the input PMOS and NMOS stages have the property of rejecting the input common-mode component. The input transistors are scaled in such a way that the voltage at node N1 is at nearly half-supply level, when the differential input component $V_{inp}$-$V_{inn}$=0 and the common-mode component $0<V_{CM}<V_{DD}$.

An implementation of the offset-reducing block (ORB) consists of a transimpedance stage, including MN5, MP5 and RP1. The stage is driven by the input current and generates an output voltage and is such that the feedback current generated by it is able to compensate the offset of both pre-amplifiers. Therefore the feedback current, determined by resistance RP1, the output current capability of the stage MN5-MP5 and the gain of this stage, has to be high enough to compensate the output offset current of both half pre-amplifiers. The output offset may be caused by transistor mismatch. Note that the offset-reducing block (ORB) has a frequency dependent input impedance. The relatively low input resistance of the transimpedance stage also equalises the voltage gains at both sides of the current mirrors MN3, MN4 and MP3, MP4 so the channel length modulation in the mirrored currents is not degrading the receiver common-mode rejection.

Another specific feature of the invention is the fact that the input capacitance of the stage MN6-MP6 reduces the high-frequency gain of the transimpedance stage MN5-MP5 and thus increases its input impedance $Z_{IN\_TI}$:

$$Z_{IN\_TI} = \frac{R}{1 - A_{CL}}\,,$$

with $A_{CL}$ denoting the closed loop small signal gain of the transimpedance stage and R the resistance of the feedback resistor RP1. The increase of $Z_{IN\_TI}$ causes high-frequency peaking of the input stage gain. This is equivalent to bandwidth increase in comparison to the prior art. The increased bandwidth reduces the data dependent jitter generation and increases the maximum speed of the receiving device. This is also in contrast to the prior art, where the maximum bandwidth is lower.

As an option, the invention may easily include an enhanced equalisation ,consisting of a frequency correction function in the frequency domain. An embodiment of such an implementation is shown in Fig. 4,whereby the low-pass behaviour of the channel is compensated and the deterministic jitter is cancelled by the addition of the resistors RP2,RP3 and the capacitors C1 and C2 to the original transimpedance block OB of Fig. 3. The resulting offset-reducing block is denoted ORB'. This enhanced behaviour results in an output eye diagram opening wider than the input eye opening for deterministic jitter. The equalisation is implemented as transconductance degeneration in the transimpedance stage MN5-MP5. The degenerated small signal transconductance of the inverter comprising MN5-MP5 is:

$$G_{mINV} = \frac{2 \cdot g_m}{1 + g_m \cdot Z_s}$$

where $Z_s$ is the impedance of the RC source networks (C1, RP2 and C2, RP3) and $g_m$ is the transconductance of the transistors MN5, MP5 if $Z_s$=0. Because the impedance of these RC source networks is decreasing as frequency increases, the gain is proportional to the frequency. This frequency correction compensates the low-pass response of the channel and reduces the deterministic jitter at the output. Note however that other implementations than that proposed in Fig.3 and 4 can be envisaged.

The implementation of the invention is much more simple that the prior art one. It implies coupling serially as few devices as possible between the supply terminals in order to allow minimum supply voltage operation. Furthermore, the grounded source input structure avoids the creation of common-mode poles, leading to a lower variation of the differential gain and propagation delay on common-mode extremes and to an increased dynamic range.

## Claims

1. A device comprising, between a differential pair of inputs, consisting of a first input (INN) and a second input (INP), and an output (OUT), a differential pre-amplifier (HPA1, HPA2) that comprises a first (HPA1) and a second (HPA2) half pre-amplifier, each of said half pre-amplifiers having a first (+) and a second (-) input and an output,
**characterised in that** said device further comprises an offset-reducing block (ORB) cascaded with said differential pre-amplifier (HPA1, HPA2) and arranged for reducing the offset generated by said differential pre-amplifier,
**in that** the outputs of said half pre-amplifiers are coupled together to form an input to said offset-reducing block (ORB),
**in that** said device further comprises a buffering block (BB) in series with said offset-reducing block (ORB) and arranged for amplifying and buffering the output voltage of said offset-reducing block,
**in that** the first input (+) of said first half pre-amplifier (HPA1) is coupled to a first input (INP) of said device, whilst the second input (-) of said first half pre-amplifier (HPA1) is coupled to the second input (INN) of said device, and
**in that** the first input (+) of said second half pre-amplifier (HPA2) is coupled to the first input (INP) of said device, whilst the second input (-) of said second half pre-amplifier (HPA2) is coupled to the second input (INN) of said device.

2. The device as in claim 1, **characterised in that** said offset-reducing block (ORB) comprises a transimpedance circuit.

3. The device as in claim 2, **characterised in that** said transimpedance circuit comprises a resistor (RP1) and an inverter stage (MP5-MN5).

4. The device as in any of the previous claims, **characterised in that** said offset-reducing block (ORB) additionally comprises means for equalisation.

5. The device as in claim 4, **characterised in that** said means for equalisation comprises a RC network.

6. The device as in any of the previous claims, **characterised in that** said buffering block (BB) comprises means for amplification and pulse shaping.

7. The device as in claim 6, **characterised in that** said means for amplification and pulse shaping comprises an inverter circuit (MN6-MP6).

8. A receiver structure comprising a device as in any of the previous claims.

## Patentansprüche

1. Vorrichtung, die zwischen einem Paar von Differenzeingängen, das aus einem ersten Eingang (INN) und einem zweiten Eingang (INP) besteht, und einem Ausgang (OUT) einen Differenz-Vorverstärker (HPA1, HPA2) enthält, der aus einem ersten (HPA1) und einem zweiten (HPA2) Halb-Vorverstärker besteht, wobei jeder der Halb-Vorverstärker einen ersten (+) und einen zweiten (-) Eingang und einen Ausgang hat,

**dadurch gekennzeichnet, dass** die Vorrichtung weiterhin einen Offset-Reduktions-Block (ORB), der mit dem Differenz-Vorverstärker (HPA1, HPA2) in Reihe geschaltet und so

angepasst ist, dass der den von dem Differenz-Vorverstärker erzeugten Offset verringert,

**dadurch**, dass die Ausgänge der Halb-Vorverstärker so zusammengeschaltet sind, dass sie einen Eingang des Offset-Reduktions-Blocks (ORB) bilden,

**dadurch**, dass die Vorrichtung weiterhin einen Puffer-Block (BB) in Reihe zu dem Offset-Reduktions-Block (ORB) enthält, der so angeordnet ist, dass er die Ausgangsspannung des Offset-Reduktions-Blocks verstärkt und puffert,

**dadurch**, dass der erste Eingang (+) des ersten Halb-Vorverstärkers (HPA1) mit einem ersten Eingang (INP) der Vorrichtung verbunden ist, während der zweite Eingang (-) des ersten Halb-Vorverstärkers (HPA1) mit dem zweiten Eingang (INN) der Vorrichtung verbunden ist, und

**dadurch**, dass der erste Eingang (+) des zweiten Halb-Vorverstärkers (HPA2) mit dem ersten Eingang (INP) der Vorrichtung verbunden ist, während der zweite Eingang (-) des zweiten Halb-Vorverstärkers (HPA2) mit dem zweiten Eingang (INN) der Vorrichtung verbunden ist.

**2.** Die Vorrichtung wie in Anspruch 1, **dadurch gekennzeichnet, dass** der Offset-Reduktions-Block (ORB) einen Transimpedanz-Schaltkreis enthält.

**3.** Die Vorrichtung wie in Anspruch 2, **dadurch gekennzeichnet, dass** der Transimpedanz-Schaltkreis einen Widerstand (RP1) und eine Inverterstufe (MP5-MN5) enthält.

**4.** Die Vorrichtung wie in einem beliebigen der obigen Ansprüche, **dadurch gekennzeichnet, dass** der Offset-Reduktions-Block (ORB) zusätzlich Mittel zur Entzerrung enthält.

**5.** Die Vorrichtung wie in Anspruch 4, **dadurch gekennzeichnet, dass** die Mittel zur Entzerrung ein RC-Netzwerk enthalten.

**6.** Die Vorrichtung wie in einem beliebigen der obigen Ansprüche, **dadurch gekennzeichnet, dass** der Puffer-Block (BB) Mittel zur Verstärkung und Impulsformung enthält.

**7.** Die Vorrichtung wie in Anspruch 6, **dadurch gekennzeichnet, dass** die Mittel zur Verzerrung und Impulsformung einen Inverter-Schaltkreis (MN6-MP6) enthalten.

**8.** Eine Empfänger-Struktur, die eine Vorrichtung nach einem beliebigen der obigen Ansprüche enthält.

**Revendications**

**1.** Dispositif comprenant, entre une paire différentielle d'entrées, constituée d'une première entrée (INN) et d'une deuxième entrée (INP), et une sortie (OUT), un préamplificateur différentiel (HPA1, HPA2) qui comprend un premier (HPA1) et un deuxième (HPA2) demi-préamplificateur, chacun desdits demi-préamplificateurs ayant une première (+) et une deuxième (-) entrée et une sortie, **caractérisé en ce que** ledit dispositif comprend en outre un bloc de réduction de décalage (ORB) mis en cascade avec ledit préamplificateur différentiel (HPA1, HPA2) et aménagé pour réduire le décalage généré par ledit préamplificateur différentiel,

**en ce que** les sorties desdits demi-préamplificateurs sont couplées ensemble pour former une entrée au dit bloc de réduction de décalage (ORB),

**en ce que** ledit dispositif comprend en outre un bloc tampon (BB) en série avec ledit bloc de réduction de décalage (ORB) et aménagé pour amplifier et mettre en tampon la tension de sortie dudit bloc de réduction de décalage,

**en ce que** la première entrée (+) dudit premier demi-préamplificateur (HPA1) est couplée à une première entrée (INP) dudit dispositif, tandis que la deuxième entrée (-) dudit premier demi-préamplificateur (HPA1) est couplée à la deuxième entrée (INN) dudit dispositif, et

**en ce que** la première entrée (+) dudit deuxième demi-préamplificateur (HPA2) est couplée à la première entrée (INP) dudit dispositif, tandis que la deuxième entrée (-) dudit deuxième demi-préamplificateur (HPA2) est couplée à la deuxième entrée (INN) dudit dispositif.

**2.** Le dispositif selon la revendication 1, **caractérisé en ce que** ledit bloc de réduction de décalage (ORB) comprend un circuit de transimpédance.

**3.** Le dispositif selon la revendication 2, **caractérisé en ce que** ledit circuit de transimpédance comprend une résistance (RP1) et un étage inverseur (MP5-MN5).

**4.** Le dispositif selon l'une quelconque des revendications précédentes, **caractérisé en ce que** ledit bloc de réduction de décalage (ORB) comprend en plus des moyens d'égalisation.

**5.** Le dispositif selon la revendication 4, **caractérisé en ce que** lesdits moyens d'égalisation comprennent un réseau RC.

6. Le dispositif selon l'une quelconque des revendications précédentes, **caractérisé en ce que** ledit bloc tampon (BB) comprend des moyens d'amplification et de mise en impulsion.

7. Le dispositif selon la revendication 6, **caractérisé en ce que** lesdits moyens d'amplification et de mise en impulsion comprennent un circuit inverseur (MN6-MP6).

8. Structure de récepteur comprenant un dispositif selon l'une quelconque des revendications précédentes.

Prior Art

Fig. 1

Fig. 2

Fig.3

# Fig.4